# EUROPEAN PATENT APPLICATION

(11) **EP 3 525 111 A1**
(43) Date of publication of application: **14.08.2019**
(21) Application number: 17865339.0
(22) Date of filing: 26.06.2017
(51) Int. Cl.: G06F 17/30

(54) **DATA PROCESSING METHOD AND DATA PROCESSING DEVICE**

(30) Priority: 26.10.2016 CN 201610948580
(71) Applicant: Huawei Technologies Co., Ltd., Longgang District Shenzhen, Guangdong 518129 (CN)
(72) Inventor: BAO, Dewei, Shenzhen Guangdong 518129 (CN); XIE, Yuming, Shenzhen Guangdong 518129 (CN); LI, Shihao, Shenzhen Guangdong 518129 (CN); LI, Jian, Shenzhen Guangdong 518129 (CN); CHENG, Kang, Shenzhen Guangdong 518129 (CN)
(74) Representative: Gill Jennings & Every LLP
(86) International application number: PCT/CN2017/090054
(87) International publication number: WO 2018/076739

(57) **Abstract**

Embodiments of this application disclose a data processing method and a data processing device, so as to determine, based on a plurality of logs of a same type, a log template of the log type corresponding to the plurality of logs, that is, a parsing rule, and then extract, based on the log template, variables of the plurality of logs to generate a structured log. That is, the parsing rule no longer needs to be manually set, and manual maintenance and updating on the parsing rule are not needed in a running process. The method of the embodiments of this application includes: obtaining, by a data processing device, a log set; determining, by the data processing device, that N logs in the log set belong to a first type, where N is a positive integer; determining, by the data processing device based on the N logs, a log template corresponding to the first type, where the log template corresponding to the first type is used to indicate a variable location of the N logs; and extracting, by the data processing device based on the variable location, variables from one or more logs in the N logs to generate a structured log.

## Description

### TECHNICAL FIELD

This application relates to the computer field, and in particular, to a data processing method and a data processing device.

### BACKGROUND

Log data is one type of important data in system operation. Analysis of the log data is necessary in website user behavior analysis, system operation statistics, and the like. However, it is very difficult to directly analyze a variable of a log type from massive text logs, for example, analyzing state changes recorded in a protocol log of massive texts or analyzing ports recorded in a log about port flapping caused by a transmission problem. After structuring processing is performed on a log, the log may be output in a report format (for example, generating an Excel format), and therefore it is relatively easy to collect and analyze each log variable. Therefore, a log structuring requirement usually exists in log analysis and log processing.

Currently, in a method for extracting structured log information, a data description language (English full name: Data Description Language, DDL for short) file is usually configured in an upstream system, and a parsing rule and a field definition of structured information are defined in the DDL file. The upstream system provides a log and a log DDL file for a downstream system, so that the downstream system may automatically extract structured log data based on the log DDL file. The structured log data may be loaded to a target database for subsequent analysis.

In this method, the DDL file is configured in advance and remains unchanged. However, in actual application, logs corresponding to different products or different versions are different. Therefore, the DDL file needs to be modified with change of a product or a version, and it is difficult to perform maintenance in a process of extracting structured log information.

### SUMMARY

Embodiments of this application provide a data processing method and a data processing device, so as to determine, based on a plurality of logs of a same type, a log template of the log type corresponding to the plurality of logs, that is, a parsing rule, and then extract, based on the log template, variables of the plurality of logs to generate a structured log. That is, the parsing rule no longer needs to be manually set, and manual maintenance and updating on the parsing rule are not needed in a running process.

According to a first aspect, an embodiment of this application provides a data processing method, including:
after obtaining a log set, determining, by the data processing device, that a type to which N logs in the log set belong is a first type, where N is a positive integer; then determining, by the data processing device based on the N logs, a log template corresponding to the first type, where the log template corresponding to the first type is used to indicate a variable location of the N logs, that is, a parsing rule of the N logs; and finally extracting, by the data processing device based on the variable location, a variable from one or more logs in the N logs to generate a structured log file.

In this embodiment of this application, in addition to indicating the variable location, the log template corresponding to the first type may indicate a quantity of variables or indicate other information that is corresponding to the log template corresponding to the first type, including but not limited to information such as a module name, severity, and a process ID.

In this embodiment of this application, the data processing device determines, based on a plurality of logs of a same type, the log template of the log type corresponding to the plurality of logs, that is, the parsing rule; and then extracts, based on the log template, variables of the plurality of logs to generate the structured log file. That is, the data processing device may immediately obtain and update, in a running process, the parsing rule corresponding to the log, the parsing rule no longer needs to be manually set, and manual maintenance and updating on the parsing rule are not needed in the running process.

Optionally, when the data processing device determines, based on the N logs, the log template corresponding to the first type, the following manner may be used:
obtaining, by the data processing device, the M^{th} log in the N logs, where M is a positive integer; and
if M is equal to 1, using, by the data processing device, the M^{th} log as the log template corresponding to the first type, or updating, by the data processing device based on the M^{th} log, a first target template determined based on another log that is of a same type with the N logs with the log template corresponding to the first type; or
if M is greater than or equal to 2, updating, by the data processing device based on the M^{th} log, a second target template determined based on the (M-1)^{th} log with the log template corresponding to the first type.

A specific manner in which the data processing device updates, based on the M^{th} log, the first target template determined based on another log that is of the same type with the N logs with the log template corresponding to the first type is as follows:
comparing, by the data processing device, the M^{th} log with the first target template; and
if the data processing device determines that the first target template includes a variable relative to the M^{th} log, representing, by the data processing device, the variable that is in the first target template and that is relative to the M^{th} log by using a wildcard character, and using the first target template as the log template corresponding to the first type, where the wildcard character is a preset character or character string; or
if the data processing device determines that the first target template includes no variable relative to the M^{th} log, using, by the data processing device, the first target template as the log template corresponding to the first type.

A specific manner in which the data processing device may update, based on the M^{th} log, the second target template determined based on the (M-1)^{th} log with the log template corresponding to the first type is as follows:
comparing, by the data processing device, the M^{th} log with the second target template; and
if the data processing device determines that the second target template includes a variable relative to the M^{th} log, representing, by the data processing device, the variable that is in the second target template and that is relative to the M^{th} log by using a wildcard character, and using the second target template as the log template corresponding to the first type, where the wildcard character is a preset character or character string, and the variable is a different part in the second target template relative to the M^{th} log; or
if the data processing device determines that the second target template includes no variable relative to the M^{th} log, using, by the data processing device, the second target template as the log template corresponding to the first type.

In the technical solution provided in this embodiment of this application, the data processing device determines the last log template by cyclically comparing and updating the N logs. This may ensure that logs of a same batch are generated based on a same log template, and a new log template is used when there is a new type. Therefore, a log template may be obtained and updated immediately, and accuracy of log data analysis is improved.

Optionally, when the data processing device extracts, based on the variable location in the log template corresponding to the first type, the variable from one or more logs in the N logs to generate the structured log, the following manners may be used.

In a possible implementation, the data processing device separately compares one or more logs in the N logs with the log template corresponding to the first type to determine a different part in the one or more logs in the N logs relative to the log template corresponding to the first type, and identify the different part as a variable; and then the data processing device extracts the variable to generate the structured log.

In another possible implementation, the data processing device obtains the variable location from the log template corresponding to the first type; and then the data processing device separately extracts, based on the variable location from one or more logs in the N logs, variables corresponding to the variable location to generate the structured log.

In the technical solution provided in this embodiment of this application, the data processing device may use, based on the log template corresponding to the first type, various manners to extract variables, so as to generate the structured log. That is, the data processing device may flexibly and quickly process the log.

Optionally, the data processing device may determine, according to a classification algorithm or a clustering algorithm, that the N logs in the log set belong to the first type. In actual application, the classification algorithm that may be used by the data processing device includes but is not limited to application decision tree classification algorithm, Bayes classification algorithm, BP neural network algorithm, and K-Means algorithm. The clustering algorithm includes but is not limited to SOM clustering algorithm and FCM clustering algorithm. There are also other algorithms, for example, logs are classified by measuring a distance or relevance between logs.

In the technical solution provided in this embodiment of this application, the data processing device may flexibly and quickly classify logs, and effectively increase a log processing speed.

Optionally, the data processing device establishes, by using the index, a mapping relationship between the log template corresponding to the first type and the N logs, that is, one template may be corresponding to a plurality of logs. On this basis, when the data processing device structures the N logs, the data processing device may query, by using the mapping relationship and the index, the log template corresponding to the first type corresponding to the N logs, and the data processing device extracts, based on the variable location in the log template corresponding to the first type, the variable in the N logs to generate the structured log.

In the technical solution provided in this embodiment of this application, after the data processing device establishes the index mapping relationship between the log template corresponding to the first type and the N logs, a speed of generating the structured log by the data processing device may be effectively increased, and log processing efficiency is improved.

Optionally, after generating the structured log, the data processing device may further send the structured log and the log template corresponding to the first type to a downstream system.

In the technical solution provided in this embodiment of this application, the data processing device sends the structured log and the log template corresponding to the structured log to the downstream system, so that the downstream system may correctly analyze the structured log.

Optionally, the structured log generated by the data processing device further includes but is not limited to any one or more of a time, a host name, a template name, severity, and a process identification ID.

In the technical solution provided in this embodiment of this application, more information included in the structured log indicates higher accuracy of a result obtained when the downstream system analyzes the structured log.

According to a second aspect, an embodiment of this application provides a data processing device, and the data processing device has a function of implementing the data processing device in the foregoing method. The function may be implemented by hardware, or may be implemented by hardware by implementing corresponding software. The hardware or the software includes one or more modules corresponding to the foregoing function.

In a possible implementation, the data processing device includes:
an obtaining module, configured to obtain a log set; and
a processing module, configured to: determine that N logs in the log set belong to a first type, where N is a positive integer; determine, based on the N logs, a log template corresponding to the first type, where the log template corresponding to the first type is used to indicate a variable location of the N logs; and extract, based on the variable location, variables from one or more logs in the N logs to generate a structured log.

In another possible implementation, the data processing device includes:
a transceiver, a processor, and a bus; where:
the transceiver is connected to the processor by using the bus;
the transceiver performs the following step:
   obtaining a log set; and
   the processor performs the following steps:
      determining that N logs in the log set belong to a first type, where N is greater than or equal to 1;
      determining, based on the N logs, a log template corresponding to the first type, where the log template corresponding to the first type is used to indicate a variable location of the N logs; and
      extracting, based on the variable location, variables from one or more logs in the N logs to generate a structured log.

According to a third aspect, an embodiment of this application provides a computer storage medium. The computer storage medium stores program code, and the program code is used to instruct to perform the method according to the first aspect.

It may be learned from the foregoing technical solutions that the embodiments of this application have the following advantages: The data processing device determines, based on a plurality of logs of a same type, the log template of the log type corresponding to the plurality of logs, that is, the parsing rule; and then extracts, based on the log template, variables of the plurality of logs to generate the structured log. That is, the parsing rule no longer needs to be manually set, and manual maintenance and updating on the parsing rule are not needed in a running process.

### BRIEF DESCRIPTION OF DRAWINGS

FIG. 1 is a block diagram of a system of structuring logs according to an embodiment of this application;
FIG. 2 is a schematic diagram of an embodiment of a data processing method according to an embodiment of this application;
FIG. 3 is a schematic diagram of an embodiment of a data processing device according to an embodiment of this application; and
FIG. 4 is a schematic diagram of another embodiment of a data processing device according to an embodiment of this application.

### DESCRIPTION OF EMBODIMENTS

Embodiments of this application provide a data processing method and a data processing device, so as to determine, based on a plurality of logs of a same type, a log template of the log type corresponding to the plurality of logs, that is, a parsing rule, and then extract, based on the log template, variables of the plurality of logs to generate a structured log. That is, the parsing rule no longer needs to be manually set, and manual maintenance and updating on the parsing rule are not needed in a running process.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

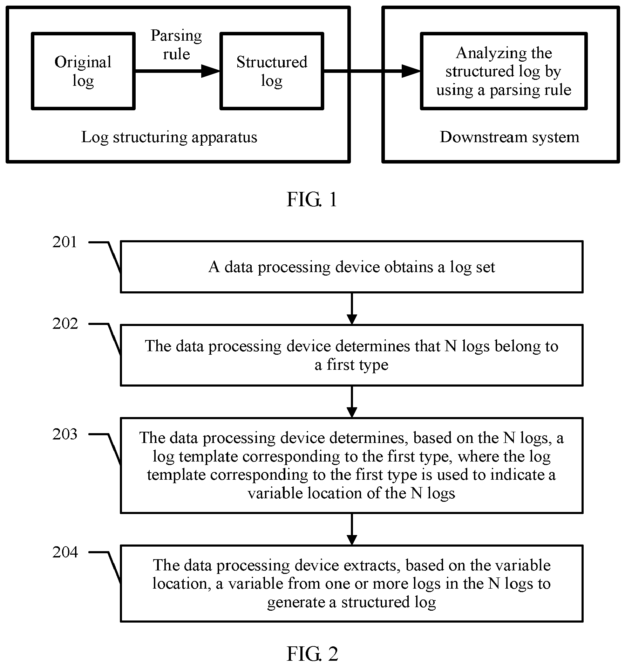

Log data is one type of important data in system operation. Analysis of log data is necessary in website user behavior analysis, system operation statistics, and the like. However, it is very difficult to directly analyze a variable of a log type from massive text logs. Referring to FIG. 1, currently, after structuring processing is performed on a log, the structured log is usually output in a report format, and therefore it is relatively easy to collect and analyze each log variable. Therefore, a log structuring requirement usually exists in log analysis and log processing. Currently, in a method for extracting structured log information, a DDL file is usually configured in an upstream system, and a parsing rule and a field definition of structured information are defined in the DDL file. The upstream system provides a log and a log DDL file for a downstream system, so that the downstream system may automatically extract structured log data based on the log DDL file. The structured log data may be loaded to a target database for subsequent analysis. In this method, the DDL file is configured in advance and remains unchanged. However, in actual application, logs corresponding to different products or different versions are different. Therefore, the DDL file needs to be modified with change of a product or a version, and it is difficult to perform maintenance in a process of extracting structured log information.

To resolve this problem, the embodiments of this application provide the following solution: after obtaining a log set, determining, by the data processing device, that a type to which N logs in the log set belong is a first type, where N is a positive integer; then determining, by the data processing device based on the N logs, a log template corresponding to the first type, where the log template corresponding to the first type is used to indicate a variable location of the N logs, that is, a parsing rule of the N logs; and finally extracting, by the data processing device based on the variable location, a variable from one or more logs in the N logs to generate a structured log file.

For details, refer to FIG. 2. An embodiment of a data processing method according to an embodiment of this application includes the following steps.

201. A data processing device obtains a log set.

The data processing device obtains the log set.

In actual application, the data processing device may obtain the first log file in various manners, including but not limited to interface-based importing and interface-based transmission. A specific manner is not limited herein. The log set includes but is not limited to a system log (English full name: System Log, Syslog for short). In addition, the data processing device usually obtains massive logs, and the data processing device usually processes the logs in batches in a log structuring process. That is, when a duration of logs obtained by the data processing device reaches a preset duration, or a quantity of logs obtained by the data processing device reaches a preset threshold, the data processing device assorts the obtained logs as a log set, classifies the logs in the log set based on types, and determines templates of log types corresponding to the logs, that is, parsing rules. The preset duration and the preset threshold are determined in advance, and specific values are not limited herein.

202. The data processing device determines that N logs in the log set belong to a first type.

The data processing device parses each log in the log set, and assorts the N logs of a same type as one type, that is, the first type.

In actual application, the data processing device may determine a type of each log in the log set in various manners. For example, the data processing device may determine a type of the first log file by using a classification algorithm or a clustering algorithm, or determine the type of the first log file by obtaining source code of the first log file. The classification algorithm that may be used by the data processing device includes but is not limited to application decision tree classification algorithm, Bayes classification algorithm, BP neural network algorithm, and K-Means algorithm. The clustering algorithm includes but is not limited to SOM clustering algorithm and FCM clustering algorithm. There are also other algorithms, for example, logs are classified by measuring a distance or relevance between logs.

203. The data processing device determines, based on the N logs, a log template corresponding to the first type, where the log template corresponding to the first type is used to indicate a variable location of the N logs.

The data processing device determines, based on the N logs, the log template corresponding to the first type, where the log template corresponding to the first type is used to indicate the variable location of the N logs.

In actual application, when the data processing device determines, based on the N logs, the log template corresponding to the first type, the following manner may be used:
obtaining, by the data processing device, the M^{th} log in the N logs, where M is a positive integer; and
if M is equal to 1, using, by the data processing device, the M^{th} log as the log template, or updating, by the data processing device based on the M^{th} log, a first target template determined based on another log that is of a same type with the N logs with the log template; or if M is greater than or equal to 2, updating, by the data processing device based on the M^{th} log, a second target template determined based on the (M-1)^{th} log with the log template. A specific manner in which the data processing device updates, based on the M^{th} log, the first target template determined based on another log that is of the same type with the N logs with the log template is as follows: comparing, by the data processing device, the M^{th} log with the first target template; and if the data processing device determines that the first target template includes a variable relative to the M^{th} log, representing, by the data processing device, the variable that is in the first target template and that is relative to the M^{th} log by using a wildcard character, and using the first target template as the log template, where the wildcard character is a preset character or character string; or if the data processing device determines that the first target template includes no variable relative to the M^{th} log, using, by the data processing device, the first target template as the log template. A specific manner in which the data processing device may update, based on the M^{th} log, the second target template determined based on the (M-1)^{th} log with the log template is as follows: comparing, by the data processing device, the M^{th} log with the second target template; and if the data processing device determines that the second target template includes a variable relative to the M^{th} log, representing, by the data processing device, the variable that is in the second target template and that is relative to the M^{th} log by using a wildcard character, and using the second target template as the log template, where the wildcard character is a preset character or character string; or if the data processing device determines that the second target template includes no variable relative to the M^{th} log, using, by the data processing device, the second target template as the log template. The wildcard character may be a character or a character string such as an asterisk "*", an exclamation point "!", a pound sign "#", and a plurality of asterisks "***". The asterisk "*" is used as an example for description in this embodiment of this application.

For example, the log set includes four logs, and details are shown in FIG. 1. It may be learned according to an algorithm that a log shown in the second line and a log shown in the third line are logs of a same type, and a log shown in the fourth line and a log shown in the fifth line are logs of a same type. The log shown in the second line and the log shown in the third line are used as an example in this embodiment of this application.

**Table 1**

| **Time** | **Host name** | **Module** | **Severity** | **Process ID** | **Message (MSG)** |
|---|---|---|---|---|---|
| May 18 2016 00:24:30 | ROUTER-1 | BFD | 3 | 31533 | The BFD session went Down. SessName is 26585-tdm, Interface is GE1/1/0 |
| May 18 2016 00:24:35 | ROUTER-1 | BFD | 3 | 31533 | The BFD session went Down. SessName is 26586-tdm, Interface is GE1/2/0 |
| May 15 2016 08:35:38 | ROUTER-1 | IFNET | 4 | 21000 | Slot 6, Vcpu 0, Interface output flow exceeded the threshold. |
| May 15 2016 08:36:38 | ROUTER-1 | IFNET | 4 | 21000 | Slot 7, Vcpu 1, Interface output flow exceeded the threshold. |

A specific manner in which the data processing device determines a log template corresponding to a type of the two logs is as follows: When the data processing device obtains a first log from the two logs, that is, the log shown in the second line in Table 1, the data processing device may use the first log as the log template. That is, a current log template is shown in Table 2:

**Table 2**

| **Template** |
|---|
| The BFD session went Down. SessName is 26585-tdm, Interface is GE1/1/0 |

when the data processing device obtains a second log from the two logs, that is, the log shown in the third line in Table 1, the data processing device needs to update, based on the second log, the log template determined based on the first log, that is, the log template shown in Table 2. In this case, the data processing device compares the second log with the log template shown in Table 2, and represents a different part in the log template shown in Table 2 relative to the second log with the wildcard character *, so as to generate the log template shown in Table 3. In this case, the log template of the first type that is corresponding to the two logs is the log template shown in Table 3.

**Table 3**

| **Template** |
|---|
| The BFD session went Down. SessName is*, Interface is * |

In actual application, specifically, when the data processing device obtains the first log, the data processing device may generate the log template in the following manner: The data processing device obtains a first target template determined in last log processing process based on a log that is of a same type with the first type in this embodiment of this application. The first target template is shown in Table 3, and the data processing device may compare the first log with the first target template to determine whether the first target template includes a variable relative to the first log. If the variable exists, the data processing device represents words that are considered as variables relative to the first log in the first target template with the wildcard character *, so as to generate the log template shown in Table 4; or if the variable does not exist, the data processing device uses the first target template, that is, Table 3 as the log template. When the data processing device obtains the second log, the data processing device compares the second log with the log template shown in Table 4. If a variable exists, the data processing device represents words that are considered as variables relative to the first log in the first target template with the wildcard character *, so as to generate the log template shown in Table 4; or if the variable does not exist, the data processing device uses the first target template, that is, Table 3 as the log template. In actual application, if the first log is "The BFD session went Up. SessName is 26585-tdm, Interface is GE1/1/0", the data processing device updates, based on the first log, the first target template shown in Table 3, and a log template of the first type that is obtained by the data processing device is shown in Table 5.

**Table 4**

| **Template** |
|---|
| The BFD session went Down. SessName is*, Interface is * |

**Table 5**

| **Template** |
|---|
| The BFD session went *. SessName is*, Interface is * |

In actual application, the data processing device may further establish a mapping relationship between the N logs and the log template corresponding to the first type. In this way, when the data processing device structures, based on the log template corresponding to the first type, one or more logs in the N logs to generate the structured log, the data processing device may quickly find a log in the N logs based on the mapping relationship.

In this embodiment of this application, when the data processing device determines, based on the N logs, the log template that is determined by the N logs and that is corresponding to the first type, in a possible implementation, the data processing device may directly traverse the log set, and separately perform a log template generating process at a same time on each log based on a type annotation. For example, the log set includes five logs, a log 1, a log 3, and a log 4 are logs of a first type, and a log 2 and a log 5 are logs of a second type. In this case, when the data processing device traverses the log set, the following cases may occur: The first log obtained by the data processing device is the log 1, and in this case, the data processing device uses the log 1 as a log template of the first type. Then the second log obtained by the data processing device is the log 2, and in this case, the data processing device learns, based on a type annotation, that a type of the second log is different from a type of the first log. The data processing device uses the log 2 as the first log of the second type, and in this case, the data processing device uses the log 2 as a log template of the second type. Further, the third log obtained by the data processing device is the log 3, and in this case, the data processing device learns, based on a type annotation, that types of the third log and the first log are the same; and the data processing device updates, based on the third log, the log template determined based on the first log to obtain a log template, which is used as the log template of the first type. The fourth log obtained by the data processing device is the log 4, and in this case, the data processing device learns, based on a type annotation, that types of the fourth log, the third log, and the first log are the same; and the data processing device updates, based on the fourth log, the log template determined based on the third log to obtain a final log template, which is used as the log template of the first type. Finally, the fifth log obtained by the data processing device is the log 5, and in this case, the data processing device learns, based on a type annotation, that types of the fifth log and the second log are the same; and the data processing device updates, based on the fifth log, the log template determined based on the first log to obtain a final log template, which is used as the log template of the second type. Certainly, the example cases in this embodiment of this application are merely possible cases, and a specific case is not limited herein. In another possible implementation, the data processing device may separately traverse logs of each type to obtain log templates corresponding to logs of each type. For example, if the log set is shown in Table 1, when the data processing device separately traverses logs of different types, the following cases may occur: The data processing device first traverses logs shown in the second line and the third line in Table 1, and then traverses logs shown in the fourth line and the fifth line in Table 1. The log shown in the second line in Table 1 and the log shown in the third line in Table 1 are of the first type, and the log shown in the fourth line in Table 1 and the log shown in the fifth line in Table 1 are of the second type. Details are as follows: When the data processing device obtains the first log of the first type, that is, the log shown in the second line of Table 1, the data processing device uses the first log as the log template of the first type; then when the data processing device obtains the second log of the first type, that is, the log shown in the third line of Table 1, the data processing device updates, based on the second log, the log template determined based on the first log to generate the final log template of the first type; further, when the data processing device obtains the first log of the second type, that is, the log shown in the fourth line of Table 1, the data processing device uses the first log of the second type as the log template of the second type; and finally, when the data processing device obtains the second log of the second type, that is, the log shown in the fifth line of Table 1, the data processing device updates, based on the second log of the second type, the log template determined based on the first log of the second type to generate the final log template of the second type. Certainly, the example cases in this embodiment of this application are merely possible cases, and a specific case is not limited herein.

In this embodiment of this application, when the data processing device determines, based on the N logs, the log template corresponding to the first type, the data processing device may further separate the N logs with statement separators to generate word vectors. The statement separator herein is a preset character or a preset character string such as an asterisk "*", a space " ", and a comma ",". A specific selection is not limited herein.

204. The data processing device extracts, based on the variable location, a variable from one or more logs in the N logs to generate a structured log.

The data processing device extracts, based on the variable location, the variable of the N logs to generate the structured log.

In actual application, the data processing device may structure the N logs in the following manners:

In a possible implementation, the data processing device directly compares each of the N logs with the log template; and then the data processing device identifies a different part in each log in the N logs relative to the log template as variables, and extracts the variable to generate the structured log. For example, in this embodiment of this application, the data processing device compares the log template shown in Table 3 with the two logs in Table 1, and determines different parts in the two logs relative to the log template; and then the data processing device extracts the different parts to generate the structured log shown in Table 6.

In another possible implementation, the data processing device parses the log template to obtain information about the variable location in the log template; and then the data processing device extracts each variable corresponding to the variable location from the N logs to generate the structured log. For example, for the template shown in Table 3 in this embodiment of this application, if the data processing device uses the punctuation and the word as a unit, the data processing device may learn that locations of the 8^{th} word and the 11^{th} word in the log template are variable locations. Therefore, when the data processing device traverses the two logs shown in Table 1, the data processing device may directly extract variables from the locations of the 8^{th} word and the 11^{th} word of the two logs to generate the structured log shown in Table 5.

**Table 6**

| **Variable 1** | **Variable 2** |
|---|---|
| 26585-tdm | GE1/1/0 |
| 26586-tdm | GE1/2/0 |

In actual application, the structured log may further include information such as a time, a host name, and a module. If the structured log shown in Table 6 is used as an example, the structured log is shown in Table 7.

**Table 7**

| **Time** | **Host name** | **Module** | **Severity** | **Process ID** | **Variable 1** | **Variable 2** |
|---|---|---|---|---|---|---|
| May 18 2016 00:24:30 | ROUTER-1 | BFD | 3 | 31533 | 26585-tdm | GE1/1/0 |
| May 18 2016 00:24:35 | ROUTER-1 | BFD | 3 | 31533 | 26586-tdm | GE1/2/0 |

After generating the structured log, the data processing device may further send the structured log and the log template to a downstream system, so that the downstream system may parse the structured log based on the log template.

In this embodiment of this application, the data processing device determines, based on a plurality of logs of a same type, the log template of the log type corresponding to the plurality of logs, that is, the parsing rule; and then extracts, based on the log template, variables of the plurality of logs to generate the structured log. That is, the data processing device may immediately obtain and update, in a running process, the parsing rule corresponding to the log, the parsing rule no longer needs to be manually set, and manual maintenance and updating on the parsing rule are not needed in the running process. The foregoing has described the data processing method in this embodiment of this application. The following describes the data processing device in this embodiment of this application.

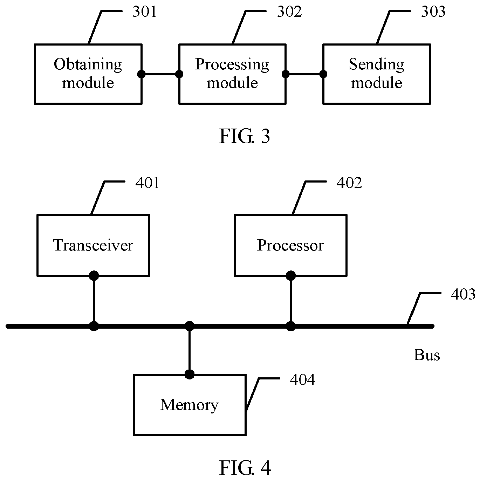

For details, refer to FIG. 3. In this embodiment of this application, the data processing device includes:
an obtaining module 301, configured to obtain a log set; and
a processing module 302, configured to: determine that N logs in the log set belong to a first type, where N is a positive integer; determine, based on the N logs, a log template corresponding to the first type, where the log template corresponding to the first type is used to indicate a variable location of the N logs; and extract, based on the variable location, variables from one or more logs in the N logs to generate a structured log.

Optionally, the processing module 302 is specifically configured to obtain the M^{th} log in the N logs, where M is a positive integer; and
when M is equal to 1, use the M^{th} log as a log template corresponding to the first type;
or
update, based on the M^{th} log, a first target template, and using the first target template as the log template corresponding to the first type, where the first target template is a log template determined based on another log that is of a same type with the N logs.

Optionally, when M is greater than or equal to 2, the processing module 302 is specifically configured to update, based on the M^{th} log, a second target template, and using the second target template as the log template corresponding to the first type, where the second target template is a log template determined by the data processing device based on the (M-1)^{th} log.

Optionally, the processing module 302 is specifically configured to compare the M^{th} log with the second target template; and
if it is determined that the second target template includes a variable relative to the M^{th} log, represent the variable that is in the second target template and that is relative to the M^{th} log by using a wildcard character, and use the second target template as the log template corresponding to the first type, where the wildcard character is a preset character or character string; or
if it is determined that the second target template includes no variable relative to the M^{th} log, use the second target template as the log template corresponding to the first type.

Optionally, the processing module 302 is specifically configured to: identify a different part in one or more logs in the N logs obtained by comparing the one or more logs in the N logs with the log template corresponding to the first type as the variable; and extract the variable to generate the structured log.

Optionally, the processing module 302 is specifically configured to: obtain the variable location recorded by the log template corresponding to the first type; and extract, from one or more logs in the N logs, a variable corresponding to the variable location to generate the structured log.

Optionally, the processing module 302 is specifically configured to determine, according to a classification algorithm or a clustering algorithm, that the N logs in the log set belong to the first type.

Optionally, the processing module 302 is further configured to establish a mapping relationship between the log template corresponding to the first type and the N logs; and
the processing module 302 is specifically configured to query, based on the mapping relationship, one or more logs in the N logs that are corresponding to the log template corresponding to the first type; and
extract, based on the variable location in the log template corresponding to the first type, the variables from the N logs to generate the structured log.

Optionally, the data processing device further includes a sending module 303, configured to send the structured log and the log template corresponding to the first type to a downstream system.

Optionally, the structured log further includes any one or more of a time, a host name, a module name, severity, and a process ID.

Further, the data processing device in FIG. 3 may be configured to: perform any step performed by the data processing device in FIG. 2, and implement any function implemented by the data processing device in FIG. 2.

In this embodiment of this application, the processing module 302 determines, based on a plurality of logs of a same type, the log template of the log type corresponding to the plurality of logs, that is, a parsing rule; and then the processing module 302 extracts, based on the log template, variables of the plurality of logs to generate the structured log. That is, the data processing device may immediately obtain and update, in a running process, the parsing rule corresponding to the log, the parsing rule no longer needs to be manually set, and manual maintenance and updating on the parsing rule are not needed in the running process.

For details, refer to FIG. 4. In another embodiment of a data processing device according to an embodiment of this application, the data processing device includes:
a transceiver 401, a processor 402, and a bus 403, where the transceiver 401 is connected to the processor 402 by using the bus 403.

The bus 403 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 4, but this does not mean that there is only one bus or only one type of bus.

The processor 402 may be a central processing unit (central processing unit, CPU for short), a network processor (network processor, NP for short), or a combination of a CPU and an NP.

The processor 402 may further include a hardware chip. The hardware chip may be an application-specific integrated circuit (application-specific integrated circuit, ASIC for short), a programmable logic device (programmable logic device, PLD for short), or a combination of an application-specific integrated circuit and a programmable logic device. The PLD may be a complex programmable logic device (complex programmable logic device, CPLD for short), a field-programmable gate array (field-programmable gate array, FPGA for short), a generic array logic (generic array logic, GAL for short), or any combination thereof.

Referring to FIG. 4, the data processing device may further include a memory 404, and the memory 404 may be further configured to store a log set. The memory 404 may include a volatile memory (volatile memory) such as a random-access memory (random-access memory, RAM for short). The memory may also include a non-volatile memory (non-volatile memory) such as a flash memory (flash memory), a hard disk drive (hard disk drive, HDD for short), or a solid-state drive (solid-state drive, SSD for short). The memory 404 may also include a combination of the foregoing types of memories.

Optionally, the memory 404 may be further configured to store a program instruction. The processor 402 may perform one or more steps or an optional implementation in the embodiment shown in FIG. 2 by invoking the program instruction stored in the memory 404, so as to implement a function of the data processing device in the foregoing method. In this embodiment of this application, the transceiver 401 performs step 201 shown in FIG. 2; and
the processor performs step 202 to step 204 shown in FIG. 2.

In this embodiment of this application, the processor 402 determines, based on a plurality of logs of a same type, the log template of the log type corresponding to the plurality of logs, that is, a parsing rule; and then the processor 402 extracts, based on the log template, variables of the plurality of logs to generate the structured log. That is, the data processing device may immediately obtain and update, in a running process, the parsing rule corresponding to the log, the parsing rule no longer needs to be manually set, and manual maintenance and updating on the parsing rule are not needed in the running process.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again. In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments. In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A data processing method, comprising:
obtaining, by a data processing device, a log set;
determining, by the data processing device, that N logs in the log set belong to a first type, wherein N is a positive integer;
determining, by the data processing device based on the N logs, a log template corresponding to the first type, wherein the log template corresponding to the first type is used to indicate a variable location of the N logs; and
extracting, by the data processing device based on the variable location, variables from one or more logs in the N logs to generate a structured log.

2. The method according to claim 1, wherein the determining, by the data processing device based on the N logs, a log template corresponding to the first type comprises:
obtaining, by the data processing device, the M^{th} log in the N logs, wherein M is a positive integer; and
when M is equal to 1, using, by the data processing device, the M^{th} log as a log template corresponding to the first type; or
updating, by the data processing device based on the M^{th} log, a first target template, and using the first target template as the log template corresponding to the first type, wherein the first target template is a log template determined based on another log that is of a same type with the N logs.

3. The method according to claim 2, wherein when M is greater than or equal to 2, the determining, by the data processing device based on the N logs, a log template corresponding to the first type comprises:
updating, by the data processing device based on the M^{th} log, a second target template, and using the second target template as the log template corresponding to the first type, wherein the second target template is a log template determined by the data processing device based on the (M-1)^{th} log.

4. The method according to claim 3, wherein the updating, by the data processing device based on the M^{th} log, a second target template, and using the second target template as the log template corresponding to the first type comprises:
comparing, by the data processing device, the M^{th} log with the second target template; and
if the data processing device determines that the second target template comprises a variable relative to the M^{th} log, representing, by the data processing device, the variable that is in the second target template and that is relative to the M^{th} log by using a wildcard character, and using the second target template as the log template corresponding to the first type, wherein the wildcard character is a preset character or character string; or
if the data processing device determines that the second target template comprises no variable relative to the M^{th} log, using, by the data processing device, the second target template as the log template corresponding to the first type.

5. The method according to claim 1, wherein the extracting, by the data processing device based on the variable location, variables from one or more logs in the N logs to generate a structured log comprises:
identifying, by the data processing device, a different part in one or more logs in the N logs obtained by comparing the one or more logs in the N logs with the log template corresponding to the first type as the variable; and
extracting, by the data processing device, the variable to generate the structured log.

6. The method according to claim 1, wherein the extracting, by the data processing device based on the variable location, variables from the N logs to generate a structured log comprises:
obtaining, by the data processing device, the variable location recorded by the log template corresponding to the first type; and
extracting, by the data processing device from one or more logs in the N logs, a variable corresponding to the variable location to generate the structured log.

7. The method according to any one of claims 1 to 6, wherein the determining, by the data processing device, that N logs in the log set belong to a first type comprises:
determining, by the data processing device according to a classification algorithm or a clustering algorithm, that the N logs in the log set belong to the first type.

8. The method according to any one of claims 1 to 6, wherein the method further comprises:
establishing, by the data processing device, a mapping relationship between the log template corresponding to the first type and the N logs; and
the extracting, by the data processing device based on the variable location, variables from one or more logs in the N logs to generate a structured log comprises:
querying, by the data processing device based on the mapping relationship, one or more logs in the N logs that are corresponding to the log template corresponding to the first type; and
extracting, by the data processing device based on the variable location in the log template corresponding to the first type, the variables from one or more logs in the N logs to generate the structured log.

9. The method according to any one of claims 1 to 6, after the extracting, by the data processing device based on the variable location, variables from one or more logs in the N logs to generate a structured log, the method further comprises:
sending, by the data processing device, the structured log and the log template corresponding to the first type to a downstream system.

10. The method according to any one of claims 1 to 6, wherein the structured log further comprises any one or more of a time, a host name, a module name, severity, and a process identification ID.

11. A data processing device, comprising:
an obtaining module, configured to obtain a log set; and
a processing module, configured to: determine that N logs in the log set belong to a first type, wherein N is a positive integer; determine, based on the N logs, a log template corresponding to the first type, wherein the log template corresponding to the first type is used to indicate a variable location of the N logs; and extract, based on the variable location, variables from one or more logs in the N logs to generate a structured log.

12. The data processing device according to claim 11, wherein the processing module is specifically configured to: obtain the M^{th} log in the N logs, wherein M is a positive integer; and
when M is equal to 1, use the M^{th} log as a log template corresponding to the first type;
or
update, based on the M^{th} log, a first target template, and using the first target template as the log template corresponding to the first type, wherein the first target template is a log template determined based on another log that is of a same type with the N logs.

13. The data processing device according to claim 12, wherein when M is greater than or equal to 2, the processing module is specifically configured to update, based on the M^{th} log, a second target template, and using the second target template as the log template corresponding to the first type, wherein the second target template is a log template determined by the data processing device based on the (M-1)^{th} log.

14. The data processing device according to claim 13, wherein the processing module is specifically configured to compare the M^{th} log with the second target template; and
if it is determined that the second target template comprises a variable relative to the M^{th} log, represent the variable that is in the second target template and that is relative to the M^{th} log by using a wildcard character, and use the second target template as the log template corresponding to the first type, wherein the wildcard character is a preset character or character string; or
if it is determined that the second target template comprises no variable relative to the M^{th} log, use the second target template as the log template corresponding to the first type.

15. The data processing device according to claim 11, wherein the processing module is specifically configured to: identify a different part in one or more logs in the N logs obtained by comparing the one or more logs in the N logs with the log template corresponding to the first type as the variable; and extract the variable to generate the structured log.

16. The data processing device according to claim 11, wherein the processing module is specifically configured to: obtain the variable location recorded by the log template corresponding to the first type; and extract, from one or more logs in the N logs, a variable corresponding to the variable location to generate the structured log.

17. The data processing device according to any one of claims 11 to 16, wherein the processing module is specifically configured to determine, according to a classification algorithm or a clustering algorithm, that the N logs in the log set belong to the first type.

18. The data processing device according to any one of claims 11 to 16, wherein the processing module is further configured to: establish an index for the log template corresponding to the first type, and establish, by using the index, a mapping relationship between the log template corresponding to the first type and the N logs; and
the processing module is specifically configured to query, based on the mapping relationship, one or more logs in the N logs that are corresponding to the log template corresponding to the first type; and
extract, based on the variable location in the log template corresponding to the first type, the variables from one or more logs in the N logs to generate the structured log.

19. The data processing device according to any one of claims 11 to 16, wherein the data processing device further comprises a sending module, configured to send the structured log and the log template corresponding to the first type to a downstream system.

20. The data processing device according to any one of claims 11 to 16, wherein the structured log further comprises any one or more of a time, a host name, a module name, severity, and a process ID.

21. A data processing device, comprising:
a transceiver, a processor, and a bus; wherein:
the transceiver is connected to the processor by using the bus;
the transceiver performs the following step:
obtaining a log set; and
the processor performs the following steps:
determining that N logs in the log set belong to a first type, wherein N is greater than or equal to 1;
determining, based on the N logs, a log template corresponding to the first type, wherein the log template corresponding to the first type is used to indicate a variable location of the N logs; and
extracting, based on the variable location, variables from the N logs to generate a structured log.
